(19) Europäisches Patentamt / European Patent Office / Office européen des brevets

(11) **EP 3 431 848 A1**

(12) **EUROPEAN PATENT APPLICATION**

(43) Date of publication:
**23.01.2019 Bulletin 2019/04**

(51) Int Cl.:
*F16K 31/53* (2006.01)  *F16K 3/08* (2006.01)

(21) Application number: **17182598.7**

(22) Date of filing: **21.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Broen A/S**
**5610 Assens (DK)**

(72) Inventors:
• **Lildholdt, Mads**
**5683 Haarby (DK)**

• **Fjord Rask, Stefan**
**5240 Odense NØ (DK)**
• **Sveje Bøjgaard, Mille**
**2100 København Ø (DK)**

(74) Representative: **Rottenberg, Annabell Simone**
**Tropa ApS**
**Aagade 97, 1st Floor**
**8370 Hadsten (DK)**

Remarks:
Amended claims in accordance with Rule 137(2) EPC.

(54) **CONTROL VALVE**

(57)    A control valve (2) comprising a housing (4) provided with a first port (6) and a second port (8) and a passageway (5) provided therebetween. The control valve (2) comprises a rotatably mounted disc (28) provided with one or more openings and one or two stationary mounted structures (34, 34') arranged adjacent to the rotatably mounted disc (28). The one or two stationary mounted structures (34, 34') are each provided with one or more openings for allowing a flow through the one or two stationary mounted structures (34, 34'). The control valve (2) further comprises a control unit (78) connected to an actuator (16) configured to rotate the rotatably mounted disc (28) on the basis of one or more internal or external signals.

Fig. 11B

EP 3 431 848 A1

**Description**

**Field of invention**

The present invention relates to a control valve providing an alternative to the complex control valves available on the marked today. The present invention also relates to a control valve that is compact and can be fully closed, regulated in an accurate manner even in the low flow range and used to regulate flow in a large flow range. The control valve is intended for being used in HVAC installations or water or oil applications in general.

**Prior art**

Control valves are used in various applications for regulating the flow through pipe systems. A control valve typically comprises two separate structures: a valve assembly and an actuator that needs to be mechanically connected to the valve assembly. Accordingly, most prior art control valves are rather large and complex. This is a disadvantage in an application in which there is limited space available (e.g. in an integrated water circuit).
Therefore, it would be an advantage to have a more compact control valve.
Moreover, a prior art control valve typically covers a limited flow range. Accordingly, several prior art control valves are needed to cover regulation of flow in a large flow range with the required accuracy. In practice, it is therefore required to produce more control valve variants to be able to cover a large flow range.
Thus, there is a need for a control valve that has a larger flow range and at the same time provides the required accuracy especially in the low flow range.
Furthermore, most prior art control valves of the pressure independent type require a significant differential pressure across the diaphragm, in order to perform the required flow regulation. Accordingly, power is constantly required in the application, in which the control valve is installed. Accordingly, to save energy, it would be advantageous to have a control valve that can be operated with a minimum differential pressure across the control valve.
It is also an object of the present invention to provide a pressure independent control valve in order to achieve an increased energy efficiency.
It is further an object to provide a bi-directional control valve that does not have a predefined flow direction.

**Summary of the invention**

The object of the present invention can be achieved by a control valve as defined in claim 1. Preferred embodiments are defined in the dependent sub claims, explained in the following description and illustrated in the accompanying drawings.
The control valve according to the invention is a control valve comprising a housing provided with a first port and a second port and a passageway having a longitudinal axis provided therebetween, said control valve further comprising:

- a rotatably mounted disc provided with one or more openings for allowing a flow through the rotatably mounted disc;
- one or two stationary mounted structures arranged adjacent to the rotatably mounted disc, wherein the one or two stationary mounted structures each are provided with one or more openings for allowing a flow through the one or two stationary mounted structures;
- an electrical actuator configured to rotate the rotatably mounted disc, wherein the control valve comprises a control unit connected to the electrical actuator on the basis of one or more internal or external signals.

Hereby, it is possible to achieve a compact control valve compared to the prior art control valves. It is also possible to provide a control valve that is completely tight in the closed position. Furthermore, the energy expenditure of the control valve is reduced compared with prior art control valves that comprise a diaphragm, since no differential pressure is required in order to regulate the control valve according to the invention at low flow. Moreover, it is possible to achieve a bi-directional control valve.
In the following, the rotatably mounted disc is also referred to as the rotating disc.
By changing the (angular) position of the rotatably mounted disc, the degree of alignment (or dis-alignment) of the openings in the rotatably mounted disc and the one or two adjacent stationary mounted structures can be controlled. Accordingly, by controlling the angular position of the rotatably mounted disc relative to the one or two adjacent stationary mounted structures, the control valve regulates the flow through it.
The control valve comprising a housing provided with a first port (inlet port or outlet port) and a second port (inlet port or outlet port) and a passageway provided therebetween. The ports preferably extend perpendicular to the longitudinal axis of the housing. The ports may have any suitable geometry, including circular, oval, rectangular, hexagonal or octagonal. The ports may preferably be provided at the distal end of male fittings attached to the housing in their proximal end. The fittings are preferably provided with an outer thread and a flat face at the distal end portion.

It is preferred that the housing is a sealed encasing without any potential leak points. This may be achieved by producing the housing in a closed metal housing provided with ports. It is preferred, that the part of the housing that encases the electronic part of the control valve is made of a non-metallic material (e.g. a plastic material).

The control valve further comprises a rotatably mounted disc provided with one or more openings. The disc may have any desired geometry. It may be beneficial that two openings are provided in the rotatably mounted disc in order to distribute the pressure (exerted by the fluid flowing through the control valve) evenly.

The one or two stationary mounted structures arranged adjacent to the rotatably mounted disc may have any suitable geometry. The one or two stationary mounted structures may be provided with one or more openings having any suitable geometry for allowing a flow through the one or two stationary mounted structures. The rotatably mounted disc and the stationary mounted structure(s) may comprise a ceramic material (e.g. be made in a ceramic material), a metal or plastic or combinations thereof.

The actuator arranged inside the housing may be any suitable type of electrical actuator configured to rotate the rotatably mounted disc.

The actuator may preferably be radially displaced relative to the rotatably mounted disc. Hereby, the actuator will not take up space or block the passageway provided between the first port and the second port. Accordingly, it is possible to provide a control valve enabling a high maximum flowrate through the passageway.

It may be an advantage that the first port is aligned with the second port. Hereby, it is possible to provide a compact control valve that can be installed in most existing pipe systems and replace existing control valves.

It may be beneficial that the rotatably mounted disc is rotatably mounted on a shaft extending parallel to the longitudinal axis of the passageway. Hereby, it is possible to arrange the rotatably mounted disc centrally in the passageway and thus provide a compact control valve.

It may be an advantage that the control valve is an inline-type control valve, wherein the fluid flows basically parallel to the longitudinal axis of the passageway. This means that the flow through the passageway extends along a basically straight path between the first port and the second port.

Control valves having an inline configuration are beneficial in various situations. Moreover, it is possible to reduce the resistance in the control valve especially in the fully open configuration. Moreover, it is possible to provide a compact control valve.

It may be advantageous that the rotatably mounted disc is rotatably mounted on a shaft extending parallel to the longitudinal axis. It may be beneficial that the longitudinal axis extends parallel to the direction of the flow. Hereby, the rotatably mounted disc can be moved entirely in a plane perpendicular to the direction of the flow. Thus, the size of the rotatably mounted disc and the one or two stationary mounted structures can be minimized. Accordingly, it is possible to provide a compact control valve.

It may be an advantage that a gear is arranged at the circumference (e.g. the outer periphery) of the rotatably mounted disc. Hereby, it is possible to rotate the rotatably mounted disc by means of an engaging gear unit (e.g. a worm gear), a rack or a toothed belt.

It may be an advantage that the actuator comprises a motor shaft provided with a gear engaging with a gear of the rotatably mounted disc directly or through a series of gears.

Alternatively, it is possible to drive the rotatably mounted disc by using a magnetic drive installed to provide a coupling between the actuator or a component attached thereto and the rotatably mounted disc.

It may be advantageous that the shaft extending parallel to the longitudinal axis of the passageway is provided with a through-going channel. Hereby, it is possible to measure the pressure at the chamber arranged next to an adjacent port (e.g. the first port) by a sensor in fluid configuration with the through-going channel.

It may be beneficial that a sensor is arranged and configured to detect the pressure of a fluid at the first port, the second port or in a chamber arranged in the passageway provided therebetween.

It may be an advantage that a sensor is arranged and configured to detect the differential pressure between the first port and the second port or between two locations along the passageway provided therebetween.

It may be advantageous that a sensor is arranged and configured to detect the temperature of a fluid flowing through the control valve.

By applying a sensor configured to detect one or more of these parameters, it is possible to apply the detected parameters to accurately control the exact flow flowing through the control valve. It is also possible to supply the user or controller of the system with continuous live measurements from the valves in the system.

By measuring the differential pressure across the control valve and determining the (angular) position of the rotatably mounted disc and using the information about the valve characteristic (the relation between the opening area of the valve and the angular position of the rotatably mounted disc), it is possible to estimate the flow without a flow sensor by applying the following equation (I):

$$Q = K_v \cdot \sqrt{\Delta P} \quad,$$

(I)

where Q is the flow, $K_v$ is the flow coefficient and $\Delta P$ is the pressure drop (differential pressure) across the valve.

It is preferred that the sensor is arranged and configured to detect:

a) the pressure of a fluid in the first chamber, the second chamber or somewhere along the passageway and/or
b) the differential pressure between the first chamber and the second chamber or at two points somewhere along the passageway and/or
c) the temperature of a fluid flowing through the control valve.

It may be an advantage that the sensor is mounted within a mounting structure inside the housing, wherein a shaft protrudes from the mounting structure and a channel extending along the longitudinal axis of the control valve towards the second port, wherein the channel extends along the longitudinal axis of the control valve towards the first port. Hereby, it is possible to apply the sensor as a differential pressure sensor detecting the differential pressure across the control valve.

It may be an advantage to provide the control valve with a differential pressure sensor that is in fluid communication with both the first port through the channel and with the second port through the channel. Hereby, it is possible to apply the sensor as a differential pressure sensor to detect the pressure drop across the control valve.

It is preferred that wherein the shaft is provided with a channel being in fluid communication with the second chamber and the sensor and/or wherein the channel is in fluid communication with the sensor and the first chamber.

It may be an advantage that the sensor is electrically connected to an electronic component arranged in the housing. Hereby, it is possible to apply the differential pressure measurements to regulate the flow through the control valve. The electronic component preferably comprises a control unit or is connected to a control unit either arranged in the housing or outside the housing.

It may be beneficial that the rotating disc is sandwiched between two stationary discs, wherein the rotating disc and the two stationary discs constitute a disc assembly, wherein said discs are provided with openings for allowing a fluid to pass through the disc assembly. Hereby, it is possible to produce the adjacent structures (the stationary discs) in another material than the housing. It may be an advantage to produce the rotating disc and the two stationary discs in the same material e.g. in a ceramic material or another wear resistant material and produce the housing in another materiel a such as metal or plastic (e.g. fibre-reinforced plastic).

It may be advantageous that the rotating disc abuts a stationary disc, wherein said rotating disc and stationary disc constitute a disc assembly, wherein said discs are provided with openings for allowing a fluid to pass through the disc assembly. By applying abutting discs, it is possible to provide a tight disc assembly.

It may be an advantage that one or more gaskets or sealing rings are arranged to seal the mounting structure against the inside surface of the wall of the housing. It may be beneficial that one or more gaskets or sealing rings are arranged to seal the mounting structure against the stationary disc arranged in the shortest distance from the first port.

It may be beneficial that a gasket or a sealing ring is arranged in an annular groove for sealing the stationary disc against the inside surface of the wall of the housing.

Hereby, it is possible to provide a reliable and simple sealing structure.

It may be advantageous that the rotatably mounted disc and the one or two stationary mounted structures are shaped to form a control valve having an equal percentage characteristic. It may be beneficial that the rotatably mounted disc and the one or two stationary mounted structures are shaped to form a control valve having a modified equal percentage characteristic.

An equal percentage characteristic is essentially an exponential relationship between the degree of opening (stroke) in percentage and the area or flow through the valve in percentage. This is done to achieve small flows as well as large flow; and to have small incremental change of flow at small flows, where it is necessary; and have large incremental change of flow at large flows, where it is acceptable. Since the valve is required to close completely to deliver a zero flow, it is a fundamental challenge that an exponential relationship never reaches zero. Accordingly, it is necessary to make a modification of the equal percentage characteristic that enables complete close-off of the valve.

It may be beneficial that the control valve comprises a control unit configured to receive absolute pressure and/or relative pressure and/or differential pressure data from one or more sensing members and regulate the flow in a pressure independent manner.

Hereby, it is possible to provide a pressure independent control valve. Pressure independent control valves can provide automatic flow regulation to maintain a constant flow of a fluid (e.g. hot or chilled water) regardless of system pressure changes. Pressure independent control valves are used in many closed loop heating, ventilation and air conditioning (HVAC) applications.

One of the advantages by using pressure independent control valves in a system is that the need for being balanced and rebalanced during commissioning is minimized. Pressure independent control valves regulate and maintain a constant flow as the fluid pressure in the system varies with the changing loads. This provides better comfort and increases the energy efficiency. Accordingly, pressure independent valves allow the system to perform better. With the desired flow delivered to each coil, boilers and chillers are most efficient in closed loop HVAC applications. Therefore, as pressure independent control valves deliver a constant flow even as loads change and valves in the system open and close using them makes installation and commissioning simpler.

In one embodiment according to the invention, the control valve comprises a control unit configured to limit the maximum flowrate according to a predefined flow range. This is another way of commissioning the valve, which will further minimize the work for an installer commissioning the system.

In a preferred embodiment according to the invention, the control valve comprises a control unit, preferably a build-in control unit, configured to modulate the flow according to one or more internally and/or externally provided control signals by using the actuator.

In a preferred embodiment according to the invention, the control valve comprises a control unit configured to control the flow on the basis of differential pressure measurements.

In one embodiment according to the invention, the control valve is a differential pressure control valve.

It may be an advantage that the control valve comprises a control unit configured to receive sensor data from a sensor and control/regulate the actuator on the basis of these data and hereby regulate the angular position of the rotatably mounted disc and e.g. the differential pressure across the control valve. The sensor may be provided in the housing of the control valve. The sensor may be an external sensor arranged outside the housing. Several internally and/or externally arranged sensors may be provided inside or outside the housing, respectively.

It may be an advantage that the control unit is configured to receive a control signal input from an external source being a thermostat or a building management system.

It may be advantageous that the control valve comprises a control unit configured to provide a power estimation based on flow measurements made by a sensor integrated in the housing and temperature information, preferably temperature measurements made by a sensor in the control valve and an additional externally arranged temperature sensor.

It may be an advantage that the control valve comprises an externally arranged temperature sensor configured to provide temperature measurements and send them to a control unit of the control valve. The control unit of the control valve may be integrated in the housing or be externally arranged (e.g. in an external box connected to the control valve).

Hereby, the control valve is configured to detect the power and thus function as a heat meter and/or power meter.

It may be an advantage that the control valve comprises a sensor or an encoder configured and arranged to detect the configuration, preferably the angular position relative to a reference position, of the rotatably mounted disc. Hereby, it is possible to monitor the position of the rotatably mounted disc on a continuous basis.

The control valve according to the invention may comprise one or more wired or wireless communication modules, preferably arranged in an electronic component inside the housing or in an external control box. Any suitable wired or wireless communication protocol may be applied.

In a preferred embodiment according to the invention, the control valve comprises a control signal module, configured to be compatible with any building management system.

In one embodiment, according to the invention. the control valve comprises a communication module configured to communicate by means of a wireless personal area network technology such as Bluetooth Low Energy. Hereby, it is possible to access the communication module by means of a smartphone. Thus, configuration such as commissioning of the valve is possible by using a smartphone.

In one embodiment according to the invention, the control valve comprises a power loss module comprising an internal electrical power source such as a battery and a detection unit configured to detect the status of an external electrical power supply, wherein the detection unit is configured to detect a case of power loss (of the external electrical power supply) and wherein the detection unit is configured to perform an action in case of power loss (external electrical power supply). The action may be to close the control valve. The action may be to generate and send an alert and/or to activate an activation device.

It is preferred that the control valve comprises a power loss module comprising an internal power source, a detection unit configured to detect the power supply (or lack thereof), wherein the power loss module comprises a programmable/settable device configured to execute a predefined action in case of power failure.

It may be advantageous that the control valve comprises a sensor or an encoder configured and arranged to detect the configuration, preferably the angular position relative to a reference position, of the rotatably mounted disc. Hereby, it is possible to determine the configuration of the control valve (e.g. on a continuous basis). Accordingly, the flow can be determined in an easy and accurate manner.

It may be an advantage that the control valve comprises a power loss module comprising an internal power source, a detection unit configured to detect the activity of the power supply (or lack thereof), wherein the power loss module comprises a programmable/settable device configured to execute a predefined action in case of power failure.

It may be an advantage, that the control valve comprises an internal power source such as an energy harvesting device and an energy storage device configured to harvest and store energy continuously for continuous use in the control valve thus making it independent of any external power source.

Several of the parts described can be combined into one component, e.g. the fittings and the housing parts or the mounting structure and one of the housing parts.

**Description of the Drawings**

The invention will become more fully understood from the detailed description given herein below. The accompanying drawings are given by way of illustration only, and thus, they are not limitative of the present invention. In the accompanying drawings:

Fig. 1A       shows a perspective view of a control valve according to the invention;
Fig. 1B       shows another perspective view of the control valve shown in Fig. 1A;
Fig. 1C       shows a side view of the control valve shown in Fig. 1A;
Fig. 1D       shows a front view of the control valve shown in Fig. 1A;
Fig. 1E       shows another side view of the control valve shown in Fig. 1A;
Fig. 2A       shows a cross-sectional view of a control valve shown in Fig. 2B;
Fig. 2B       shows a front view of the control valve according to the invention;
Fig. 3A       shows a side view of a control valve according to the invention;
Fig. 3B       shows a cross-sectional view of the control valve shown in Fig. 3A;
Fig. 4A       shows a front view of a disc assembly of a control valve according to the invention;
Fig. 4B       shows a top view of the disc assembly shown in Fig. 4A;
Fig. 4C       shows a perspective view of the disc assembly shown in Fig. 4A;
Fig. 4D       shows a perspective view of another disc assembly of a control valve according to the invention;
Fig. 5A       shows a front view of a disc assembly of a control valve according to the invention;
Fig. 5B       shows a top view of the disc assembly shown in Fig. 5A;
Fig. 5C       shows a perspective view of the disc assembly shown in Fig. 5A;
Fig. 6A       shows a front view of a disc assembly of a control valve according to the invention;
Fig. 6B       shows a top view of the disc assembly shown in Fig. 6A;
Fig. 6C       shows a perspective view of the disc assembly shown in Fig. 6A;
Fig. 7A       shows the flow characteristics of two disc assemblies of a control valve according to the invention;
Fig. 7B       shows a front view of a disc assembly according to the invention, in a configuration in which the angular position is 0°;
Fig. 7C       shows a front view of the disc assembly shown in Fig. 7B, in a configuration in which the angular position is 30°;
Fig. 7D       shows a front view of the disc assembly shown in Fig. 7B, in a configuration in which the angular position is 60°;
Fig. 7E       shows a front view of the disc assembly shown in Fig. 7B, in a configuration in which the angular position is 90°;
Fig. 8A       shows a schematic view of a control valve according to the invention;
Fig. 8B       shows a schematic view of another control valve according to the invention;
Fig. 8C       shows a schematic view of a further control valve according to the invention and
Fig. 8D       shows a schematic view of an even further control valve according to the invention;
Fig. 9A       shows an exploded view of a disc assembly according to the invention;
Fig. 9B       shows another exploded view of the disc assembly shown in Fig. 9A;
Fig. 9C       shows a front view of the disc assembly shown in Fig. 9A;
Fig. 9D       shows a perspective side view of a rotatably mounted disc shown in Fig. 9A;
Fig. 9E       shows a close-up view of a channel provided in the opening of the rotatably mounted disc;
Fig. 10A      shows a side view of a control valve according to the invention;
Fig. 10B      shows a cross-sectional view of the control valve shown in Fig. 10A;
Fig. 10C      shows a view of the control valve shown in Fig. 10A;
Fig. 10D      shows a front view of the control valve shown in Fig. 10A;
Fig. 11A      shows a front view of a control valve according to the invention;
Fig. 11B      shows a cross-sectional view of the control valve shown in Fig. 11A;
Fig. 11C      shows a side view of the control valve shown in Fig. 11A;
Fig. 11D      shows a cross-sectional view of the control valve shown in Fig. 11C;
Fig. 12A      shows a front view of a control valve according to the invention;
Fig. 12B      shows a cross-sectional view of the control valve shown in Fig. 12A;
Fig. 12C      shows the control valve shown in Fig. 12A from the other end;

Fig. 12D    shows a cross-sectional view of the control valve shown in Fig. 12C;

Fig. 12E    shows another control valve according to the invention;

Fig. 12F    shows a cross-sectional view of the control valve shown in Fig. 12E;

**Detailed description of the invention**

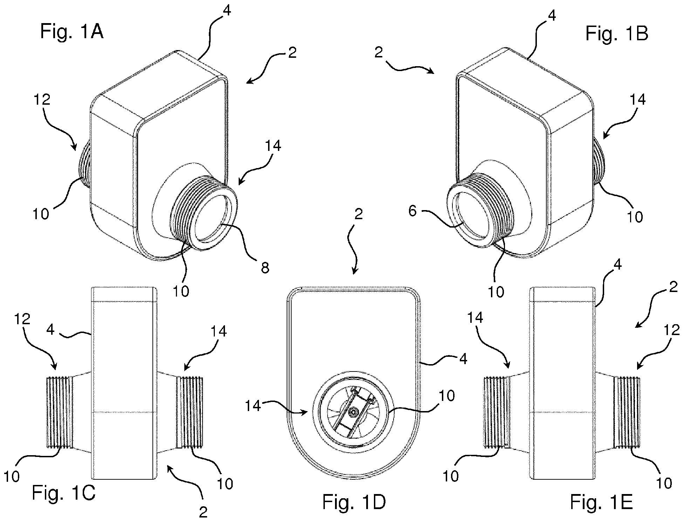

Referring now in detail to the drawings for the purpose of illustrating preferred embodiments of the present invention, a control valve 2 of the present invention is illustrated in Fig. 1A.

Fig. 1A illustrates a perspective view of a control valve 2 according to the invention, whereas Fig. 1B illustrates another perspective view of the control valve shown in Fig. 1A. The control valve 2 comprises a housing 4 provided with a first fitting 12 and a second fitting 14. The first fitting 12 and the second fitting 14 are provided with a threaded portion 10. The first fitting 12 constitutes a first port, whereas the second fitting 14 constitutes a second port 8. The fittings 12, 14 are arranged in an inline configuration, and thus the valve control valve 2 is an inline control valve 2.

Fig. 1C illustrates a side view of the control valve 2 shown in Fig. 1A and in Fig. 1B, wherein Fig. 1E illustrates a side view (seen from the opposite direction) of the control valve shown in Fig. 1C. Fig. 1D illustrates a front view of the control valve shown in Fig. 1A.

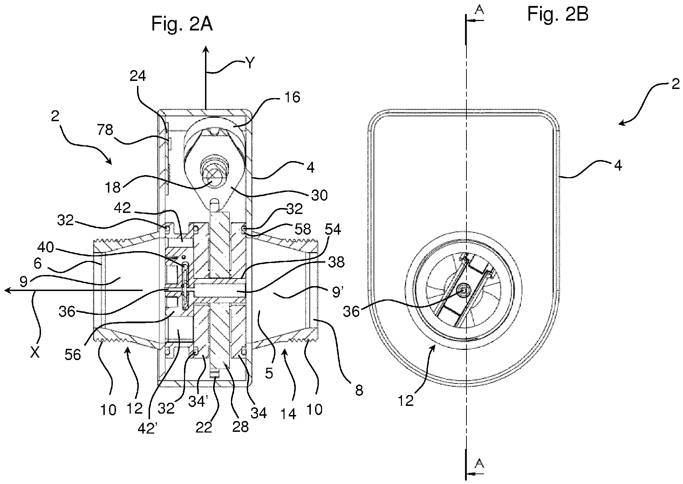

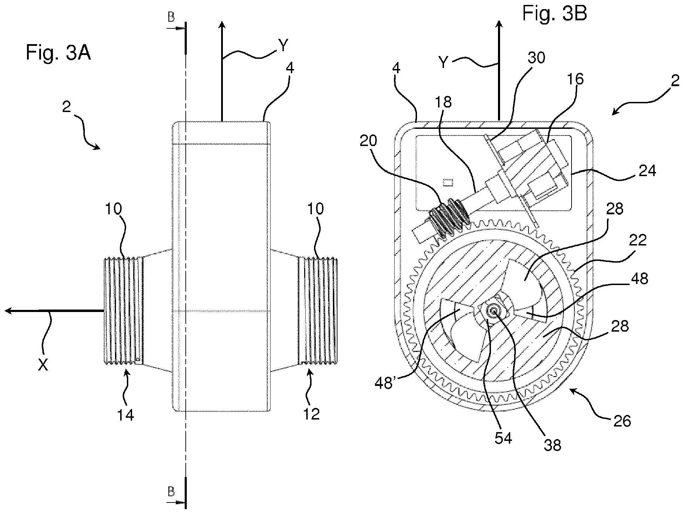

The control valve 2 comprises an integrated actuator (see Fig. 2A and Fig. 3B). The actuator may preferably be an electrical motor. In one embodiment, the actuator is controlled by means of a control unit 78 integrated in the housing 4. The control unit 78 may be configured to receive one or more inputs, including sensor inputs. Hereby, it is possible to regulate the control valve 2 on the basis of sensor inputs e.g. inputs from one or more sensors (e.g. a differential pressure sensor) arranged inside the housing.

In another embodiment, the actuator is controlled by means of a control unit 78 arranged outside the housing 4. This may in particular be beneficial in high temperature applications in order to facilitate an efficient cooling of electronic components 24. The control unit 78 may be configured to receive one or more inputs, including sensor inputs. Accordingly, the control valve 2 can be regulated on the basis of sensor inputs e.g. inputs from one or more sensors configured to detect differential pressure, temperature, flow or combinations hereof. In one embodiment according to the invention, the control valve 2 may be electrically connected to a control box arranged outside the housing 4, by means of an electric cable.

The control valve 2 may be electrically connected to an electric power source (e.g. the mains or another electrical power source) by a wired connection. Alternatively, the actuator may be powered by a battery and/or capacitor and/or energy harvester arranged inside the housing 4 or a battery and/or capacitor arranged outside the housing 4.

Fig. 2A illustrates a cross-sectional view of a control valve 2 according to the invention, whereas Fig. 2B illustrates a front view of the control valve shown in Fig. 2A. The section line for the cross-section is indicated with a dotted line in Fig. 2B.

The control valve 2 corresponds to the one illustrated in Fig. 1A-Fig. 1E and comprises a housing 4 having a first fitting 12 and a second fitting 14 protruding from the housing 4. The fittings 12, 14 extend along the longitudinal axis X of the passageway 5 and perpendicular to the longitudinal axis Y of the housing 4.

The fittings 12, 14 are provided with a threaded portion 10 arranged at the distal outside part of the fittings 12, 14, respectively. The first fitting 12 comprises a first port 6, wherein the second fitting 14 comprises a second port 8. The first port 6 and the second port 8 may be either an inlet port or an outlet port depending on the desired direction of the flow, since the control valve 2 does not have a predefined flow direction. A first chamber 9 is arranged adjacent to the first port 6, whereas a second chamber 9' is arranged adjacent to the second port 8. The chambers 9, 9' constitute separate portions of the passageway 5 of the control valve 2.

The control valve 2 comprises a rotatably mounted disc 28 provided with openings 48, 48' (see Fig. 3B). This rotating disc 28 is mounted on a shaft 54 extending along the longitudinal axis X of the passageway 5 of the control valve 2. The shaft 54 protrudes from a mounting structure 56 arranged inside the housing 4.

A differential pressure sensor 40 is mounted within the mounting structure 56. A channel 36 extending along the longitudinal axis X of the passageway 5 of the control valve 2 is arranged in the mounting structure 56. The shaft 54 is provided with a centrally arranged channel 38 in fluid communication between the second port 8 and the differential pressure sensor 40. Accordingly, the differential pressure sensor 40 is in fluid communication with both the first port 6 (through the channel 36) and with the second port 8 (through the channel 38). The sensor 40 may be electrically connected to the electronic component 24 arranged in the housing 4. Hereby, it is possible to apply the measured differential pressure measurements to regulate the flow through the control valve 2. A control unit 78 being part of the electrical components 24 is provided inside the housing 4.

The rotating disc 28 is sandwiched between two stationary discs 34, 34' each provided with openings for allowing a fluid to pass through the disc assembly 44 comprising the rotating disc 28 and the two stationary discs 34, 34'. Sealing members 32 are arranged to seal the mounting structure 56 against the inside surface of the wall of the housing 4 and against the stationary disc 34' arranged closest to the first port 6. A sealing member formed as a sealing ring 32 is arranged in the annular groove 58 to seal the stationary disc 34 against the inside surface of the wall of the housing 4.

The rotating disc 28 is provided with an outer gear 22 configured to engage with a corresponding gear of an engaging part (see Fig. 3B) attached to a shaft 18 of an actuator shaped as an electric motor 16 (e.g. a stepper motor). Hereby, the motor 16 can be used to rotate the rotating disc 28 and hereby regulate the flow through the disc assembly 44 by changing the angular position of the openings provided in the rotating disc 28 and the stationary discs 34, 34'. The motor 16 may preferably be electrically connected to the electronic component 24 so that the electronic component 24 can be used to control the motor 16 and hereby the angular position of the rotating disc 28 in order to control the flow through the disc assembly 44 of the control valve 2.

The motor 16 is attached to a plate-shape mounting 30 arranged inside the housing 4.

A first passage 42 and a second passage 42' are provided in the mounting structure 56. These passages 42, 42' facilitate the flow through the control valve by reducing the resistance through the control valve 2.

In a preferred embodiment, the rotating disc 28 is attached to a bearing mounted on the shaft 54, wherein the shaft 54 is a fixed (non-rotating) part. In another embodiment according to the invention, shaft 54 is rotatably mounted and the rotating disc 28 is fixed to the shaft 54. Both discs 34, 34' may be attached to a bearing attached to the shaft 54 or the shaft 56 extending through a through-bore provided in the discs 34, 34', wherein a gap is provided between the inner periphery of the through-bore of the discs 34, 34' and the shaft 56 for allowing free motion (rotation) of the shaft 56 extending through the through-bore of the discs 34, 34'.

Fig. 3A illustrates a side view of a control valve 2 according to the invention, whereas Fig. 3B illustrates a cross-sectional view of the control valve 2 shown in Fig. 3A. The section line for the cross-section is indicated with a dotted line in Fig. 3A. The control valve 2 comprises a housing 4 having a longitudinal axis Y. A first fitting 12 and a second fitting 14 extends along the longitudinal axis X of the control valve 2 and protrudes from the walls of the housing 4. The fittings 12, 14 extend perpendicular to the longitudinal axis Y of the housing 4.

The distal outside part of the fittings 12, 14 are provided with a threaded portion 10. The first fitting 12 and the second fitting 14 constitute a first port 6 and a second port 8, respectively. Due to the fact that the control valve 2 does not have a predefined flow direction, the first port 6 and the second port 8 may be either inlet port or outlet port depending on the desired direction of the flow.

The control valve 2 comprises a rotatably mounted disc 28 provided with openings 48, 48'. This rotating disc 28 is mounted on a shaft 54 provided with a centrally arranged channel 36 as explained with reference to Fig. 2A.

The housing 4 comprises a hemicylindrical portion 26 and the rotating disc 28 is arranged in this part of the housing 4. In the opposite (upper) end of the housing 4, an electrical component 24 is arranged. The electrical component 24 may comprise a control unit (see Fig. 2A) configured to receive and process sensor signals and to control the motor 16. Even though not shown, the electrical component 24 may be electrically connected to the motor 16 and to one or more sensors arranged in the housing 4. The motor 16 may preferably be an electric stepper motor 16.

The motor 16 comprises a shaft 18 and a worm gear 20 attached to the distal end of the motor shaft 18. The worm gear 20 is in engagement with the gear 22 provided at the periphery of the rotating disc 28. Accordingly, rotation of the motor shaft 18 will cause rotation of the rotating disc 28. Thus, the motor 16 can be used to regulate the angular position of the rotating disc 28. If the motor 16 is a stepper motor, it is possible to arrange the rotating disc 28 in a plurality of angular positions. The motor's position can be fixed or changed hereby maintaining or altering the angular position (and thus the size of the openings 48, 48' through the rotating disc 28 and its adjacent stationary discs) depending on the desired flow. It may be an advantage to apply a stepper motor 16 that divides a full rotation into a relative large number of equal steps in order to provide a large number of possible angular positions of the rotating disc 28.

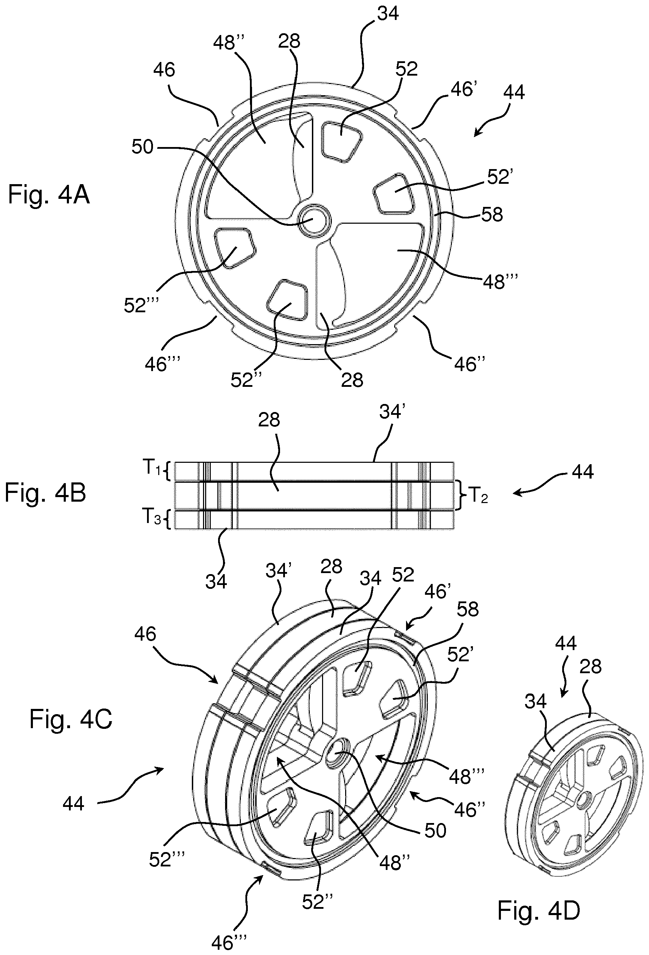

Fig. 4A illustrates a front view of a disc assembly 44 of a control valve according to the invention. Fig. 4B illustrates a side view of the disc assembly 44 shown in Fig. 4A, whereas Fig. 4C illustrates a perspective view of the disc assembly 44 shown in Fig. 4A. The disc assembly 44 comprises a centrally arranged rotating disc 28 sandwiched between a first adjacent disc 34 and a second adjacent disc 34'.

In a preferred embodiment according to the invention, the central ly arranged rotating disc 28 is rotatably mounted, whereas the adjacent discs 34, 34' are maintained in a fixed position. It is, however, possible to provide a rotation of the central disc 28 relative to the adjacent discs 34, 34' by rotating the adjacent discs 34, 34' and maintaining the centrally arranged rotating disc 28 in a fixed (angular) position. The three discs 28, 34, 34' are provided with a through-going centrally arranged bore 50 configured to receive a shaft. In a preferred embodiment, the shaft is fixed, whereas the centrally arranged rotating disc 28 is configured to rotate about the longitudinal axis of the shaft. This may be done by arranging a bearing inside the through-going centrally arranged bore 50 and attaching this bearing to the shaft. Alternatively, the shaft may have a slightly smaller diameter than the inner diameter of the through-going centrally arranged bore 50 so that the centrally arranged rotating disc 28 can rotate freely about the shaft.

The adjacent discs 34, 34' are provided with two opposing large openings 48", 48''' that each extend over approximately 90 degrees and hereby constitute an opening area close to a quarter of a circle each. The adjacent discs 34, 34' can furthermore be provided with minor grooves 52, 52', 52", 52''' for positioning the discs 34, 34'. The fluid flowing through a control valve according to the invention comprising the disc assembly 44 illustrated in Fig. 4A, Fig. 4B and Fig. 4C will flow through these openings 48", 48''' of the disc 34, the openings 48, 48' of the centrally arranged rotating disc 28 and the openings 48", 48''' of the disc 34'.

The flow depends on the angular position of the centrally arranged rotating disc 28 relative to the adjacent discs 34, 34'. By changing the angular position of the centrally arranged rotating disc 28 relative to the adjacent discs 34, 34', it is possible to regulate the area of the passage through the disc assembly 44. The area of the passage of the disc assembly 44 can be regulated from a closed position, in which the area of the passage of the disc assembly 44 is zero, to a fully open position, in which the area of the passage of the disc assembly 44 has its maximal magnitude, in the shown embodiment achieved at 90° rotation from the closed position.

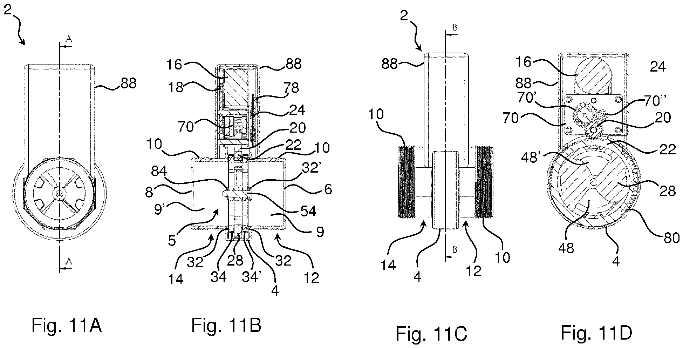

The control valve according to the invention may comprise a sensor or encoder (see Fig. 11D) arranged to detect the configuration of the disc assembly 44. In one embodiment according to the invention, the control valve comprises a sensor or encoder arranged to detect the angular position of a centrally arranged rotatably mounted disc 28.

Since there is a unique relationship between the configuration of the disc assembly 44 and the area of the passage of the disc assembly 44, the configuration of the disc assembly 44 detected by the sensor or encoder may be used to estimate the flow. Accordingly, the control valve may be configured to carry out flow estimation without having a flow sensor. It is, however, possible to integrate a flow sensor into the housing of the control valve. It is also possible to connect the control valve to an external flow sensor in order to apply the measured flow data.

The centrally arranged rotating disc 28 as well as the adjacent discs 34, 34' are provided with recesses 46, 46', 46", 46''' distributed along the outer periphery of the discs 28, 34, 34'. The recesses 46, 46', 46", 46''' and the grooves 52, 52', 52", 52''' can be used to position and mount the disc assembly 44 in one or more receiving structures inside the housing of a control valve according to the invention. The adjacent discs 34, 34' are provided with an annular groove 58 configured to receive an O-ring (see Fig. 2A) to seal the discs 34, 34' against an adjacent structure.

The thickness $T_2$ of the centrally arranged rotating disc 28 is slightly larger than the thicknesses $T_1$, $T_3$ of the adjacent discs 34, 34'. The central disc 28 as well as the adjacent discs 34, 34' have an outer periphery of the same geometry.

The centrally arranged rotating disc 28 as well as the adjacent discs 34, 34' may be made in ceramic material, in metal or in a plastic material (e.g. a fibre-reinforced plastic material of a polymer matrix reinforced with fibres of glass, carbon, aramid or basalt).

Fig. 4D illustrates a perspective view of another disc assembly 44 of a control valve according to the invention. The disc assembly 44 corresponds to the one shown in Fig. 4A, Fig. 4B and Fig. 4C except from the fact that the disc assembly 44 shown in Fig. 4D comprises only one adjacent disc 34.

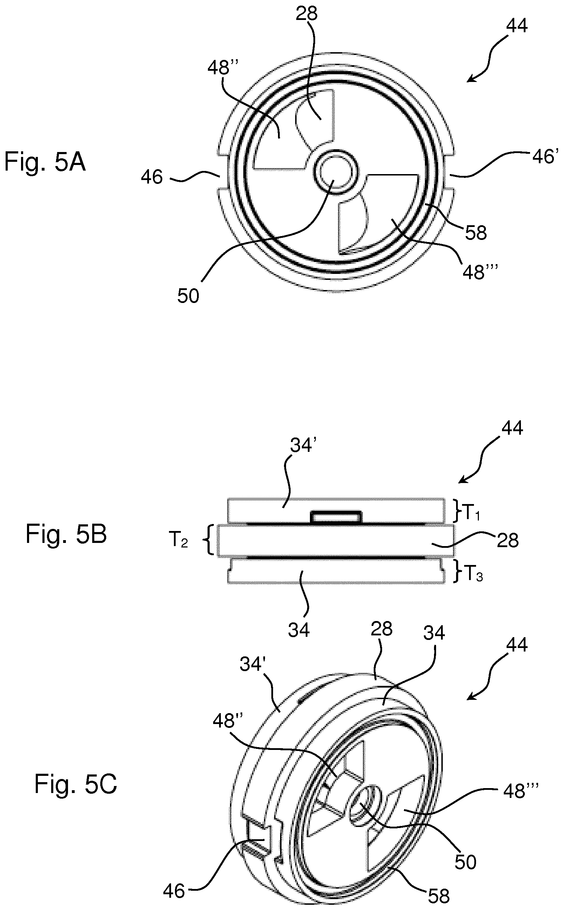

Fig. 5A illustrates a front view of a disc assembly 44 of a control valve according to the invention. Fig. 5B illustrates a side view of the disc assembly 44 shown in Fig. 5A, and Fig. 5C illustrates a perspective view of the disc assembly 44 shown in Fig. 5A. The disc assembly 44 comprises a centrally arranged rotating disc 28 sandwiched between a first adjacent disc 34 and a second adjacent disc 34'.

The centrally arranged rotating disc 28 may be rotatably mounted, whereas the adjacent discs 34, 34' are maintained in a fixed position. Alternatively, rotation of the centrally arranged rotating disc 28 relative to the adjacent discs 34, 34' may be achieved by rotating the adjacent discs 34, 34' and maintaining the centrally arranged rotating disc 28 in a fixed angular position.

The three discs 28, 34, 34' comprise a through-going centrally arranged bore 50 adapted to receive a shaft. The shaft may be a fixed (non-rotatable) structure, whereas the centrally arranged rotating disc 28 is arranged to rotate about the shaft. This can be accomplished by arranging a bearing inside the through-going centrally arranged bore 50 and attaching this bearing to the shaft or by applying a shaft having a slightly smaller diameter than the inner diameter of the through-going centrally arranged bore 50, hereby facilitating that the centrally arranged rotating disc 28 can rotate freely about the shaft.

The adjacent discs 34, 34' are provided with two opposing large openings 48", 48''' that each extend over approximately 90 degrees and hereby each constitute an opening area close to a quarter of a circle.

The flow through the disc assembly 44 and thus the control valve comprising it, depends on the angular position of the central disc 28 relative to the adjacent discs 34, 34'. By altering the angular position of the centrally arranged rotating disc 28 relative to the adjacent discs 34, 34', the area of the passage through the disc assembly 44, can be regulated. Accordingly, the area of the passage of the disc assembly 44 can be regulated between a closed position, in which the area of the passage of the disc assembly 44 is zero, to a fully open position, in which the area of the passage of the disc assembly 44 takes its maximum value.

The centrally arranged rotating disc 28 is provided with two recesses 46, 46'. The two recesses 46, 46' are distributed along the outer periphery of the discs 28, 34, 34'. The recesses 46, 46' are configured to be used to position and mount the disc assembly 44 into one or more receiving structures inside the housing of a control valve according to the invention. Each of the adjacent discs 34, 34' are provided with an annular groove 58 configured to receive a sealing ring (like shown in Fig. 2A) to seal the discs 34, 34' against an adjacent structure.

The thickness $T_2$ of the centrally arranged rotating disc 28 basically corresponds to the thicknesses $T_1$, $T_3$ of

the adjacent discs 34, 34', whereas the centrally arranged rotating disc 28 has a slightly larger diameter than the adjacent discs 34, 34'.

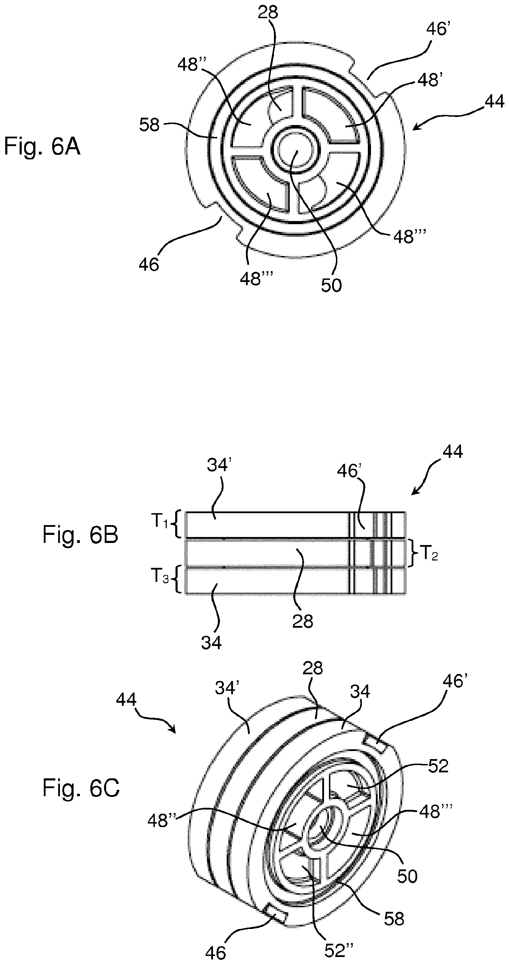

Fig. 6A illustrates a front view of a disc assembly 44 of a control valve according to the invention. Fig. 6B illustrates a side view of the disc assembly 44 shown in Fig. 6A, whereas Fig. 6C illustrates a perspective view of the disc assembly 44 shown in Fig. 6A. The disc assembly 44 comprises a centrally arranged rotating disc 28 sandwiched between a first adjacent disc 34 and a second adjacent disc 34'.

In one embodiment according to the invention, the centrally arranged rotating disc 28 is configured to be rotatably mounted, whereas the adjacent discs 34, 34' are maintained in a fixed position. In another embodiment according to the invention, rotation of the centrally arranged rotating disc 28 relative to the adjacent discs 34, 34' is carried out by rotation of the adjacent discs 34, 34' while maintaining the centrally arranged rotating disc 28 in a fixed angular position.

The three discs 28, 34, 34' comprise a through-going centrally arranged bore 50 adapted to receive a shaft extending through the three discs 28, 34, 34'. In a preferred embodiment according to the invention, the shaft is a fixed structure, whereas the centrally arranged rotating disc 28 is arranged in a position, in which it can rotate about the shaft. This may be done by providing a bearing inside the through-going centrally arranged bore 50 and attaching the bearing to the shaft. Alternatively, the shaft may have a diameter being slightly smaller than the inner diameter of the through-going centrally arranged bore 50 so that the centrally arranged rotating disc 28 can rotate freely about the shaft.

The adjacent discs 34, 34' are provided with two opposing openings 48", 48''' each extending over approximately 90 degrees.

Regulation of the flow through the disc assembly 44 and thus the control valve into which the disc assembly 44 is arranged, is carried out by controlling the angular position of the centrally arranged rotating disc 28 relative to the adjacent discs 34, 34'. By changing the angular position of the centrally arranged rotating disc 28 relative to the adjacent discs 34, 34', the area of the passage through the disc assembly 44, can be controlled. The area of the passage of the disc assembly 44 can be minimised by bringing the disc assembly 44 in a closed position, in which the area of the passage of the disc assembly 44 is zero. The area of the passage of the disc assembly 44 can be gradually increased until the disc assembly 44 is brought into its fully open configuration, in which the area of the passage of the disc assembly 44 has its highest value.

The adjacent discs 28, 34, 34' are provided with two recesses 46, 46'. The two recesses 46, 46' are distributed along the outer periphery of the discs 28, 34, 34'. The stationary discs are provided with positioning grooves 52, 52'. The recesses 46, 46' as well as the grooves 52, 52' are intended for being used for positioning and attachment of the disc assembly 44. Each of the adjacent discs 34, 34' are provided with an annular groove 58 configured to receive an O-ring for sealing the discs 34, 34' against an adjacent structure. Hereby, fluid leakage can be prevented.

The thickness $T_2$ of the centrally arranged rotating disc 28 basically corresponds to the thicknesses $T_1$, $T_3$ of the adjacent discs 34, 34'. The central disc 28 has a diameter that corresponds to the diameter of the adjacent discs 34, 34'.

The centrally arranged rotating disc 28 as well as the adjacent discs 34, 34' may be made in a wear resistant material such as ceramic material, in metal or in a plastic material (e.g. a fibre-reinforced plastic material of a polymer matrix reinforced with fibres of glass, carbon, aramid or basalt).

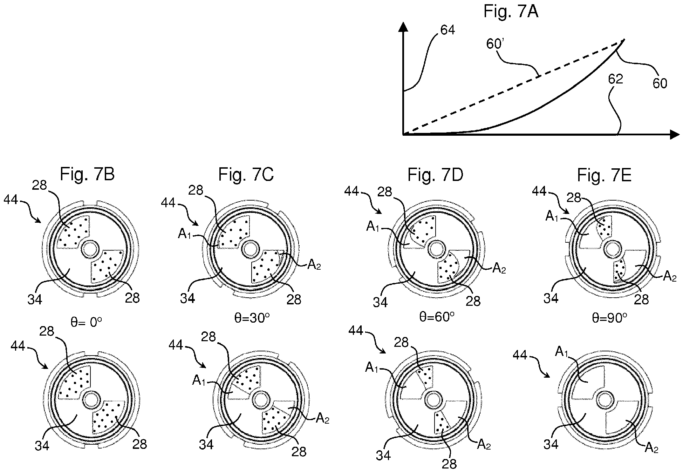

Fig. 7A illustrates the flow characteristics (modified equal percentage and linear) of a disc assembly of preferred control valves according to the invention. In practice Fig. 7A illustrates a first graph 60 (modified equal percentage characteristic) and a second graph 60' (linear characteristic) indicated by a dotted line depicting the area of the passage 64 of the disc assembly as function of the angular position 62 of a rotational disc.

Fig. 7B-Fig. 7E illustrate front views of a disc assembly 44 according to the invention in various angular positions. The angular position $\theta$, measured relative to a reference position (corresponding to a completely closed valve), is indicated. The disc assembly 44 comprises a rotatably mounted disc 28 arranged adjacent to an additional stationary mounted disc 34. The upper row illustrates front views of a disc assembly 44 configured to provide a modified equal percentage characteristic, whereas the lowermost row illustrates front views of a disc assembly 44 configured to provide a linear characteristic, respectively.

Fig. 7B illustrates a front view of a disc assembly 44, according to the invention, in a configuration in which the angular position is 0°. The rotatably mounted disc 28 covers the first and second opening of the stationary mounted disc 34. Accordingly, the disc assembly 44 is arranged in a closed position. In this closed position, the disc assembly 44 is configured to entirely block the passage through the disc assembly 44, hereby providing a zero flow.

Fig. 7C illustrates a front view of the disc assembly 44 shown in Fig. 7B, in a configuration in which the angular position is 30°. The rotatably mounted disc 28 covers the main portion of the first and second opening of the stationary mounted disc 34. However, a passage of the disc assembly 44 is established due to a first area $A_1$ and a second area $A_2$ that is not covered by the rotatably mounted disc 28. Therefore, the disc assembly 44 is arranged in a position in which the disc assembly 44 is configured to provide a low flow through the disc assembly 44.

Fig. 7D illustrates a front view of the disc assembly 44 shown in Fig. 7B, in a configuration in which the angular position is 60°. The rotatably mounted disc 28 covers a major portion of the first and second opening of the stationary mounted disc 34. Thus, a moderate passage of the disc assembly 44 is provided by a first area $A_1$ and a second area

$A_2$ that is not covered by the rotatably mounted disc 28. Consequently, the disc assembly 44 is arranged in a position in which the disc assembly 44 is configured to provide a moderate flow through the disc assembly 44.

Fig. 7E illustrates a front view of the disc assembly 44 shown in Fig. 7B, in a configuration in which the angular position is 90°. The rotatably mounted disc 28 of the uppermost valve covers a minor portion of the first and second opening of the stationary mounted disc 34. Thus, a major passage of the disc assembly 44 is provided by a first area $A_1$ and a second area $A_2$ that is not covered by the rotatably mounted disc 28. Consequently, the disc assembly 44 of the uppermost valve is arranged in a position in which the disc assembly 44 is configured to provide a major flow through the disc assembly 44. The rotatably mounted disc 28 of the lowermost valve does not cover any portion of the first and second opening of the stationary mounted disc 34. Thus, the entire passage of the disc assembly 44 is provided by a first area $A_1$ and a second area $A_2$ not being covered by the rotatably mounted disc 28. Consequently, the disc assembly 44 of the lowermost valve is arranged in a position in which the disc assembly 44 is configured to provide maximum flow through the disc assembly 44.

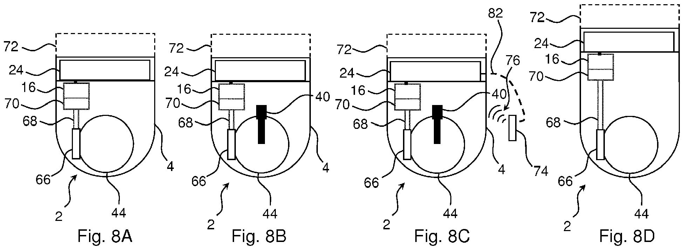

Fig. 8A illustrates a schematic view of a control valve 2 according to the invention. The control valve 2 comprises a disc assembly 44 having a rotatably mounted disc provided with at least one opening and at least one stationary mounted structure (having one or more openings for allowing a flow through the at least one stationary mounted structure) arranged adjacent to the rotatably mounted disc. The control valve 2 comprises an actuator 16, preferably an electric actuator arranged inside the housing 4 of the control valve 2. The actuator 16 is configured to rotate the rotatably mounted disc and hereby regulate the flow through the control valve 2. The actuator may be an electric stepper motor.

A connection member 68 (corresponding to the shaft 18 described with reference to Fig. 3B) connects the actuator 16 and an engagement structure 66 (e.g. a gear) that is brought into engagement with the rotatably mounted disc or a structure (e.g. a worm gear 20 corresponding to the one previously described with reference to Fig. 3B) mechanically connected thereto. A gear unit 70 is arranged to adjust (gear) the connection member 68. In one embodiment according to the invention, the gear unit 70 may be omitted.

The control valve 2 comprises an electronic component 24, preferably comprising a motor controller. The electronic component 24 is arranged above the motor and is electrically connected to the motor 16.

It is possible to provide the control valve 2 with an additional add-on unit 72. The add-on unit 72 may comprise a communication unit configured to communicate with one or more external devices (e.g. receive wireless signals transmitted by an external sensor).

Fig. 8B illustrates a schematic view of a control valve 2 according to the invention. The control valve 2 almost corresponds to the one shown in Fig. 8A. However, the control valve 2 is provided with a sensor 40 arranged to detect a pressure parameter such as an absolute pressure, a relative pressure or a differential pressure. The sensor may be configured to detect temperature of the fluid flowing through the control valve 2. The sensor and the electronic component 24 may be adapted to detect and/or estimate the flow of the fluid flowing through the control valve 2.

Fig. 8C illustrates a schematic view of a control valve 2 according to the invention. The control valve 2 basically corresponds to the one shown in Fig. 8B. The control valve 2 is, however, configured to receive wireless signals 76 from an external sensor 74. Alternatively, a wired connection 82 like indicated by the dotted line may be provided between the external sensor 74 and the control valve 2. The external sensor may be a temperature sensor, a pressure sensor or a flow sensor.

Fig. 8D illustrates a schematic view of a control valve 2 according to the invention. The control valve 2 essentially corresponds to the one shown in Fig. 8A. However, the housing 4 of the control valve 2 is longer and the actuator 16 and the electronic component 24 is arranged in a larger distance from the disc assembly 44. Hereby, control valve 2 can be used in application with high temperature and/or high pressure and/or highly corrosive media, since the actuator 16 and the electronic component 24 are arranged in a "safe position" in a distance from the media flowing through the control valve 2.

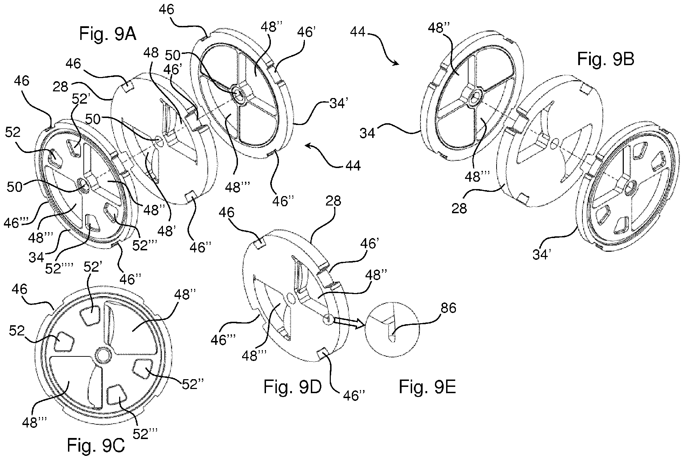

Fig. 9A illustrates an exploded view of a disc assembly 44 according to the invention, and Fig. 9B illustrates another exploded view of the disc assembly 44 shown in Fig. 9A. Fig. 9C illustrates a front view of the disc assembly 44 shown in Fig. 9A. Fig. 9D illustrates a isometric side view of a rotatably mounted disc 28 shown in Fig. 9A and Fig. 9B, whereas Fig. 9E illustrates a close-up view of a channel provided in the opening 48" of the rotatably mounted disc 28.

The disc assembly 44 comprises a centrally arranged rotatably mounted disc 28 sandwiched between a first stationary disc 34 and a second stationary disc 34'. The discs 28, 34, 34' are provided with recesses 46, 46', 46", 46''' provided along their periphery. The recesses 46, 46', 46", 46''' are intended to be used to position the discs 28, 34, 34' in a control valve according to the invention. The discs 28, 34, 34' are provided with a centrally arranged through-bore 50 that may receive a shaft.

The first stationary disc 34 comprises openings 48", 48''' for allowing a flow to pass through the disc 34 and grooves 52, 52', 52", 52''' for positioning the disc 34. Likewise, the second stationary disc 34' comprises openings 48", 48''' for allowing a flow to pass through the disc 34'. The rotatably mounted disc 28 comprises openings 48, 48' for allowing a flow to pass the disc 28. Each of these openings 48, 48' are provided with a channel 86 on one side, providing access to the "dead space" 48, 48' in the rotatably mounted disc 28 when the valve is closed.

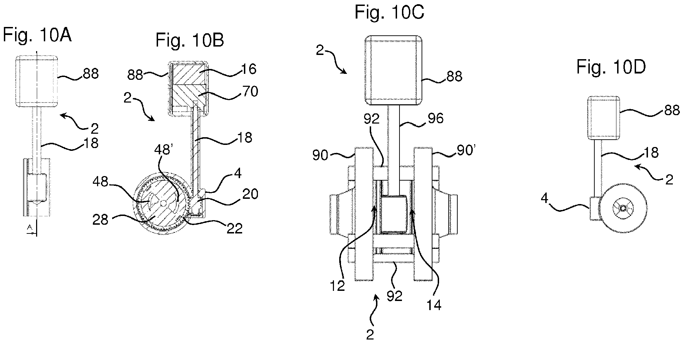

Fig. 10A, and Fig. 10D illustrate views of a control valve 2 according to the invention, whereas Fig. 10B illustrates a cross-sectional view of the control valve 2. The cross-section line is indicated in Fig. 10A. The control valve 2 comprises a motor housing 88 housing a motor 16 brought into engagement with a gear unit 70 arranged in the motor housing 88. The gear unit 70 is connected to a motor shaft 18 extending in a shaft sleeve 96. A worm gear 20 is provided in the distal end of the motor shaft 18. The worm gear is mechanically connected to the outer toothed periphery of a rotatably mounted disc 28 provided with two openings 48, 48'. Accordingly, the motor 16 is configured to rotate the rotatably mounted disc 28 and hereby alter the angular position of the rotatably mounted disc 28 in order to position the rotatably mounted disc 28 in a position relative to one or more adjacent stationary discs that provides a desired flow area through the openings 48, 48'. The control valve 2 shown in Fig. 10A, Fig. 10B and Fig. 10D is adapted to be used in a high temperature application: The electronic components can be kept safe and cold in the motor housing 88.

Fig. 10C illustrates a further view of the control valve 2 shown in Fig. 10A in an installation.
The control valve 2 comprises a motor housing 88 housing an electric motor connected to a motor shaft extending in a shaft sleeve 96. The control valve 2 comprises a first fitting 12, a second fitting 14 for fitting between two opposing flanges 90, 90'. The flanges are mechanically connected by bolts 92. The control valve 2 is configured to be used in high temperature applications, wherein the electronic components can be kept safe and relatively cold in the motor housing 88. In another embodiment the fittings 12, 14 are flanges matching the flanges 90, 90'.

Fig. 11A illustrates a front view of a control valve 2 according to the invention, whereas Fig. 11B illustrates a cross-sectional view of the control valve 2 shown in Fig. 11A. Fig. 11C illustrates a side view of the control valve 2 shown in Fig. 11A and Fig. 11B, whereas Fig. 11D illustrates a cross-sectional view of the control valve 2 shown in Fig. 11C.

The control valve 2 comprises a motor housing 88 housing an electric motor 16 having a motor shaft 18 engaging a gear unit 70. An electronic component 24 provided with a control unit 78 (configured to control the motor 16 on the basis of one or more internal or external signals) is provided in the motor housing 88. Gears 70', 70", 20 are mechanically connected in order to transfer torque to an outer toothed portion (gear) 22 of a rotatably mounted disc 28 mounted on a shaft 54.

The control valve 2 comprises a first fitting 12 provided with an outer threaded portion 10 and having a first port 6 and a second fitting 14 provided with an outer threaded portion 10 and having a second port 8. The control valve 2 comprises a rotatably mounted disc 28 provided with openings 48, 48' and being sandwiched between a first stationary disc 34 and a second stationary disc 34'. Chambers 9, 9' are provided in the passageway 5 provided between the ports 6, 8. Sealing rings 32 are provided to seal the first stationary disc 34 and a second stationary disc 34' against the housing 4 in which the discs 28, 34, 34' are arranged. A position sensor 80 is provided in the housing 4. The position sensor 80 is configured to detect the angular position of the rotatably mounted disc 28. The position sensor 80 is configured to send information about the angular position of the rotatably mounted disc 28 to the control unit 78. Accordingly, the control unit 78 can apply this information to regulate the motor 16 and control the angular position of the rotatably mounted disc 28.

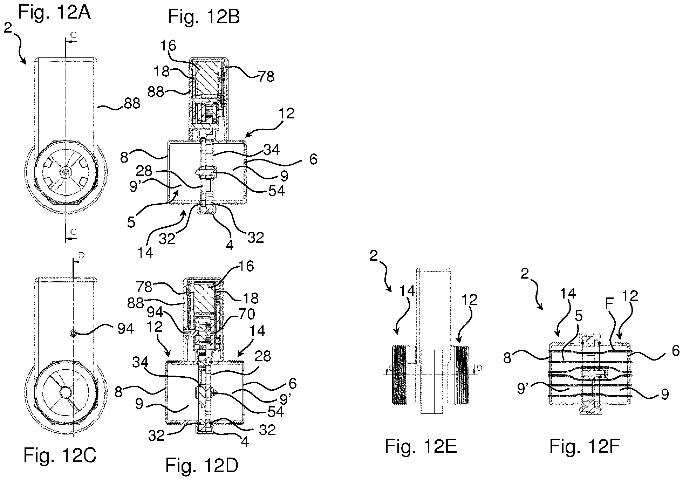

Fig. 12A illustrates a front view of a control valve 2 according to the invention, whereas Fig. 12B illustrates a cross-sectional view of the control valve 2 shown in Fig. 12A. Fig. 12C illustrates the control valve 2 shown in Fig. 12A from the other end, whereas Fig. 12D illustrates a cross-sectional view of the control valve 2 shown in Fig. 12C. The control valve 2 basically corresponds to the one shown in Fig. 11A, Fig. 11B, Fig. 11C and Fig. 11D, however, the control valve 2 only comprises a single rotatably mounted disc 28 and a single stationary disc 34 arranged adjacent to it. Moreover, an access point 94 to manual override is indicated. The access point 94 provides an engagement with one of the gears of the gear unit 70 to enable manual positioning of the rotatably mounted disc 28.

Fig. 12E illustrates a side view of a control valve 2 according to the invention, whereas Fig. 12F illustrates a cross-sectional view of the control valve 2 shown in Fig. 12E. The control valve 2 comprises a first fitting 12 having a first port 6 and a second fitting 14 having a second port 8 and a passageway 5 (having a first chamber 9 and a second chamber 9') provided therebetween. The flow F is indicated with solid lines. The flow F basically follows a straight patch. Accordingly, the control valve 2 is an inline type control valve 2.

**List of reference numerals**

| | |
|---|---|
| 2 | Control valve |
| 4 | Housing |
| 5 | Passageway |
| 6 | First port |
| 8 | Second port |
| 9, 9' | Chamber |
| 10 | Threaded portion |

| 12 | Fitting |
| 14 | Fitting |
| 16 | Motor |
| 18 | Motor shaft |
| 20 | Gear |
| 22 | Gear |
| 24 | Electronic component |
| 26 | Hemicylindrical portion |
| 28 | Rotating disc |
| 30 | Mounting |
| 32, 32' | Sealing member |
| 34, 34' | Stationary disc |
| 36 | Channel |
| 38 | Channel |
| 40 | Sensor |
| 42, 42' | Passage |
| 44 | Disc assembly |
| 46, 46', 46", 46''' | Recess |
| 48, 48', 48", 48''' | Opening |
| 50 | Through-bore |
| 52, 52', 52", 52''' | Groove |
| 54 | Shaft |
| 56 | Mounting structure |
| 58 | Annular groove |
| 60, 60' | Graph |
| 62 | Angular position |
| 64 | Area of the opening passage of the disc assembly |
| 66 | Engagement structure |
| 68 | Connection member |
| 70 | Gear unit (optional) |
| 70', 70", 70''', 70'''' | Gear |
| 72 | Add-on unit |
| 74 | External sensor |
| 76 | Wireless signal |
| 78 | Control unit |
| 80 | Position sensor |
| 82 | Wired connection |
| 84 | Disc spring |
| 86 | Channel |
| 88 | Motor housing |
| 90, 90' | Flange |
| 92 | Bolt |
| 94 | Manual access point |
| 96 | Shaft sleeve |
| F | Flow |
| $A_1$ | First area |
| $A_2$ | Second area |
| $T_1, T_2, T_3$ | Thickness |
| X, Y | Longitudinal axis |
| $\theta$ | Angular position |

**Claims**

1. A control valve (2) comprising a housing (4) provided with a first port (6) and a second port (8) and a passageway (5) having a longitudinal axis (X) provided therebetween, said control valve (2) further comprising:

- a rotatably mounted disc (28) provided with one or more openings for allowing a flow through the rotatably mounted disc (28);
- one or two stationary mounted structures (34, 34') arranged adjacent to the rotatably mounted disc (28), wherein the one or two stationary mounted structures (34, 34') each are provided with one or more openings for allowing a flow through the one or two stationary mounted structures (34, 34');
- an electrical actuator (16) configured to rotate the rotatably mounted disc (28),

wherein the first port (6) is aligned with the second port (8), **characterised in that** the control valve (2) comprises a control unit (78) connected to the electrical actuator (16) on the basis of one or more internal or external signals.

2. A control valve (2) according to claim 1, **characterised in that** the rotatably mounted disc (28) is rotatably mounted on a shaft (54) extending parallel to the longitudinal axis (X) of the passageway (5).

3. A control valve (2) according to claim 1 or 2, **characterised in that** the control valve (2) is an inline-type control valve (2), wherein the fluid flows basically parallel to the longitudinal axis (X) of the passageway.

4. A control valve (2) according to one of the preceding claims, **characterised in that** a gear is arranged at the circumference of the rotatably mounted disc (28).

5. A control valve (2) according to one of the preceding claims 2-4, **characterised in that** the shaft (54) is provided with a through-going channel (38).

6. A control valve (2) according to one of the preceding claims, **characterised in that** a sensor (40) is arranged and configured to detect:

   a) the pressure of a fluid in the first chamber (9), the second chamber (9') or somewhere along the passageway (5) and/or
   b) the differential pressure between the first chamber (9) and the second chamber (9') or at two points somewhere along the passageway (5) and/or
   c) the temperature of a fluid flowing through the control valve (2).

7. A control valve (2) according to claim 6, **characterised in that** the sensor (40) is mounted within a mounting structure (56) inside the housing (4), wherein a shaft (54) protrudes from the mounting structure (56) and a channel (36) extending along the longitudinal axis (X) of the control valve (2) is arranged in the mounting structure (56), wherein the shaft (54) is provided with a channel (38) being in fluid communication with the second chamber (9) and the sensor (40), wherein the channel (36) is in fluid communication with the sensor (40) and the first chamber (9').

8. A control valve (2) according to one of the preceding claims, **characterised in that** the rotating disc (28) is sandwiched between two stationary discs (34, 34') constituting a disc assembly (44), wherein said discs (28, 34, 34') are provided with openings (48, 48', 48", 48''') for allowing a fluid to pass through the disc assembly (44).

9. A control valve (2) according to one of the preceding claims 1-7, **characterised in that** the rotating disc (28) abuts one stationary disc (34), wherein said rotating disc (28) and stationary disc (34) constitute a disc assembly (44), wherein said discs (28, 34) are provided with openings (48, 48', 48", 48''') for allowing a fluid to pass through the disc assembly (44).

10. A control valve (2) according to one of the preceding claims, **characterised in that** the control valve (2) comprises a control unit (78) configured to receive pressure data, preferably relative pressure data and/or differential pressure data from one or more sensing members (40, 74) and regulate the valve configuration in a pressure independent manner.

11. A control valve (2) according to one of the preceding claims 6-10, **characterised in that** the control valve (2) comprises a control unit (78) configured to receive sensor data from a sensor (40, 74) and control the actuator on the basis of these data and hereby regulate the position of the rotatably mounted disc (28).

12. A control valve (2) according to one of the preceding claims, **characterised in that** the control valve (2) comprises a sensor (80) or an encoder configured and arranged to detect the configuration, preferably the angular position relative to a reference position, of the rotatably mounted disc (28).

13. A control valve (2) according to one of the preceding claims, **characterised in that** the control valve (2) comprises a control unit (78) configured to provide a power estimation based on flow measurements made by a sensor integrated in the housing (4) or a flow estimation and temperature information, preferably temperature measurements made by a sensor in the control valve (2) and an additional externally arranged temperature sensor.

14. A control valve (2) according to one of the preceding claims, **characterised in that** the control unit (78) is configured to receive a control signal input from an external source being a thermostat or a building management system.

15. A control valve (2) according to one of the preceding claims, **characterised in that** the control valve (2) comprises a power loss module comprising an internal power source, a detection unit configured to detect the power supply (or lack thereof), wherein the power loss module comprises a programmable/settable device configured to execute a predefined action in case of power failure.

**Amended claims in accordance with Rule 137(2) EPC.**

1. A control valve (2) comprising a housing (4) provided with a first port (6) and a second port (8) and a passageway (5) having a longitudinal axis (X) provided therebetween,
said control valve (2) further comprising:

   - a rotatably mounted disc (28) provided with one or more openings for allowing a flow through the rotatably mounted disc (28);
   - one or two stationary mounted structures (34, 34') arranged adjacent to the rotatably mounted disc (28), wherein the one or two stationary mounted structures (34, 34') each are provided with one or more openings for allowing a flow through the one or two stationary mounted structures (34, 34');
   - an electrical actuator (16) configured to rotate the rotatably mounted disc (28),

   wherein the first port (6) is aligned with the second port (8), **characterised in that** the control valve (2) comprises a control unit (78) connected to the electrical actuator (16) on the basis of one or more internal or external signals, wherein the control unit (78) is integrated in the housing (4) or is provided in a motor housing (88).

2. A control valve (2) according to claim 1, **characterised in that** the rotatably mounted disc (28) is rotatably mounted on a shaft (54) extending parallel to the longitudinal axis (X) of the passageway (5).

3. A control valve (2) according to claim 1 or 2, **characterised in that** the control valve (2) is an inline-type control valve (2), wherein the fluid flows basically parallel to the longitudinal axis (X) of the passageway.

4. A control valve (2) according to one of the preceding claims, **characterised in that** a gear is arranged at the circumference of the rotatably mounted disc (28).

5. A control valve (2) according to one of the preceding claims 2-4, **characterised in that** the shaft (54) is provided with a through-going channel (38).

6. A control valve (2) according to one of the preceding claims, **characterised in that** a sensor (40) is arranged and configured to detect:

   a) the pressure of a fluid in the first chamber (9), the second chamber (9') or somewhere along the passageway (5) and/or
   b) the differential pressure between the first chamber (9) and the second chamber (9') or at two points somewhere along the passageway (5) and/or
   c) the temperature of a fluid flowing through the control valve (2).

7. A control valve (2) according to claim 5 or 6, **characterised in that** the sensor (40) is mounted within a mounting structure (56) inside the housing (4), wherein a shaft (54) protrudes from the mounting structure (56) and a channel (36) extending along the longitudinal axis (X) of the control valve (2) is arranged in the mounting structure (56), wherein the shaft (54) is in fluid communication with the second chamber (9) and the sensor (40), wherein the channel (36) is in fluid communication with the sensor (40) and the first chamber (9').

8. A control valve (2) according to one of the preceding claims, **characterised in that** the rotating disc (28) is sandwiched between two stationary discs (34, 34') constituting a disc assembly (44), wherein said discs (28, 34, 34') are provided with openings (48, 48', 48", 48'") for allowing a fluid to pass through the disc assembly (44).

9. A control valve (2) according to one of the preceding claims 1-7, **characterised in that** the rotating disc (28) abuts one stationary disc (34), wherein said rotating disc (28) and stationary disc (34) constitute a disc assembly (44), wherein said discs (28, 34) are provided with openings (48, 48', 48", 48'") for allowing a fluid to pass through the disc assembly (44).

10. A control valve (2) according to one of the preceding claims, **characterised in that** the control valve (2) comprises a control unit (78) configured to receive pressure data, preferably relative pressure data and/or differential pressure data from one or more sensing members (40, 74) and regulate the valve configuration in a pressure independent manner.

11. A control valve (2) according to one of the preceding claims 6-10, **characterised in that** the control valve (2) comprises a control unit (78) configured to receive sensor data from a sensor (40, 74) and control the actuator on the basis of these data and hereby regulate the position of the rotatably mounted disc (28).

12. A control valve (2) according to one of the preceding claims, **characterised in that** the control valve (2) comprises a sensor (80) or an encoder configured and arranged to detect the configuration, preferably the angular position relative to a reference position, of the rotatably mounted disc (28).

13. A control valve (2) according to one of the preceding claims, **characterised in that** the control valve (2) comprises a control unit (78) configured to provide a power estimation based on flow measurements made by a sensor integrated in the housing (4) or a flow estimation and temperature information, preferably temperature measurements made by a sensor in the control valve (2) and an additional externally arranged temperature sensor.

14. A control valve (2) according to one of the preceding claims, **characterised in that** the control unit (78) is configured to receive a control signal input from an external source being a thermostat or a building management system.

15. A control valve (2) according to one of the preceding claims, **characterised in that** the control valve (2) comprises a power loss module comprising an internal power source, a detection unit configured to detect the power supply (or lack thereof), wherein the power loss module comprises a programmable/settable device configured to execute a predefined action in case of power failure.

Fig. 1A

Fig. 1B

Fig. 1C

Fig. 1D

Fig. 1E

Fig. 2A

Fig. 2B

Fig. 3A

Fig. 3B

Fig. 4A

Fig. 4B

Fig. 4C

Fig. 4D

Fig. 5A

Fig. 5B

Fig. 5C

Fig. 6A

28

48"

58

46

48"'

50

46'

48'

44

48""

Fig. 6B

34'

46'

44

$T_1$

$T_2$

$T_3$

34

28

Fig. 6C

44

34'

28

34

46'

52

48"

48""

46

50

58

52"

Fig. 7A

Fig. 7B   Fig. 7C   Fig. 7D   Fig. 7E

$\theta= 0°$   $\theta=30°$   $\theta=60°$   $\theta=90°$

Fig. 8A

Fig. 8B

Fig. 8C

Fig. 8D

Fig. 9A

Fig. 9B

Fig. 9C

Fig. 9D

Fig. 9E

Fig. 10A

Fig. 10B

Fig. 10C

Fig. 10D

Fig. 11A    Fig. 11B    Fig. 11C    Fig. 11D

Fig. 12A

Fig. 12B

Fig. 12C

Fig. 12D

Fig. 12E

Fig. 12F

Europäisches
Patentamt

European
Patent Office

Office européen
des brevets

# EUROPEAN SEARCH REPORT

**Application Number**

EP 17 18 2598

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/192954 A1 (JORGENSON ROGER [US]) 2 August 2012 (2012-08-02) * paragraph [0043]; figures 1, 6 * | 1-15 | INV. F16K31/53 F16K3/08 |
| X | EP 0 370 557 A1 (EMS HOLLAND BV [NL]) 30 May 1990 (1990-05-30) * page 3, lines 12-16; figure 1 * | 1-3,6-15 | |
| X | US 2006/086923 A1 (SHANK JOHN R [US] ET AL) 27 April 2006 (2006-04-27) * figures 1,3,10a, 10b, 11, 14e * | 1-6,9-15 | |
| X | DE 10 2008 042947 A1 (BOSCH GMBH ROBERT [DE]) 22 April 2010 (2010-04-22) * figures 1-5 * | 1-6,9-15 | |
| A | US 4 674 537 A (BERGMANN KONRAD [DE]) 23 June 1987 (1987-06-23) * the whole document * | 1 | |
| | | | **TECHNICAL FIELDS SEARCHED (IPC)** F16K |

The present search report has been drawn up for all claims

| Place of search | Date of completion of the search | Examiner |
|---|---|---|
| The Hague | 11 January 2018 | París López, Rosa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 2598

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2018

| Patent document cited in search report | | Publication date | Patent family member(s) | | Publication date |
|---|---|---|---|---|---|
| US 2012192954 | A1 | 02-08-2012 | NONE | | |
| EP 0370557 | A1 | 30-05-1990 | AU | 626114 B2 | 23-07-1992 |
| | | | CA | 2002925 A1 | 22-05-1990 |
| | | | DE | 68902458 D1 | 17-09-1992 |
| | | | DE | 68902458 T2 | 03-12-1992 |
| | | | DK | 584589 A | 23-05-1990 |
| | | | EP | 0370557 A1 | 30-05-1990 |
| | | | ES | 2034600 T3 | 01-04-1993 |
| | | | GR | 3005431 T3 | 24-05-1993 |
| | | | JP | H02184722 A | 19-07-1990 |
| | | | NL | 8802878 A | 18-06-1990 |
| | | | NO | 894625 A | 23-05-1990 |
| | | | NZ | 231446 A | 26-08-1992 |
| US 2006086923 | A1 | 27-04-2006 | NONE | | |
| DE 102008042947 | A1 | 22-04-2010 | CN | 102187131 A | 14-09-2011 |
| | | | DE | 102008042947 A1 | 22-04-2010 |
| | | | EP | 2350505 A1 | 03-08-2011 |
| | | | JP | 2012505999 A | 08-03-2012 |
| | | | US | 2011180737 A1 | 28-07-2011 |
| | | | WO | 2010046225 A1 | 29-04-2010 |
| US 4674537 | A | 23-06-1987 | NONE | | |

EPO FORM P0459

For more details about this annex : see Official Journal of the European Patent Office, No. 12/82